# EUROPEAN PATENT APPLICATION

(11) **EP 1 496 707 A1**
(43) Date of publication of application: **12.01.2005**
(21) Application number: 03015477.7
(22) Date of filing: 09.07.2003
(51) Int. Cl.: H04N 7/50

(54) **Encoding and decoding of video images with delayed reference picture refresh**

(71) Applicant: MATSUSHITA ELECTRIC INDUSTRIAL CO., LTD., Kadoma-shi, Osaka 571-8501 (JP)
(72) Inventor: Wedi, Thomas, 30177 Hannover (DE); Kadono, Shinya, Nishinomiya 663-8113 (JP)
(74) Representative: Grünecker, Kinkeldey, Stockmair & Schwanhäusser Anwaltssozietät

(57) **Abstract**

The present invention relates to the encoding and decoding of images of a video sequence. A reference image refresh is delayed from the temporal position of an IDR-type image within a sequence of encoded images in order to enable an inter-prediction to images to be displayed prior to the IDR-type image.

## Description

The invention generally relates to a reference picture refresh delay during encoding and decoding of video sequences. Particularly, the present invention relates to a method and apparatus for predictive encoding and decoding of video sequences employing multiple reference images and a repetitive reference picture refresh in order to allow random access.

The transmission of motion pictures requires a substantial amount of data to be sent through conventional transmission channels of a limited available frequency bandwidth. For transmitting digital data through a limited channel bandwidth, it is inevitable to compress or reduce the volume of the video data to be transmitted. Video coding standards have been developed for reducing the amount of video data. Video coding standards are denoted with H.26x for ITU -T standards and with MPEG-x for ISO/IEC standards.

The underlying coding approach of most of the video coding standards consists of the following main stages. First, each video frame of a sequence of video frames is divided into blocks of pixels, and the following processing of video frames is conducted at a block level. The quantity of video data is then reduced by analysing the video data in spatial and temporal respect. Spatial redundancies are reduced within a video frame by subjecting the video data of each block to transformation, quantization and entropy coding.

Temporal dependencies between blocks of subsequent frames are exploited in order to only transmit differences between subsequent frames. This is accomplished by employing a motion estimation and compensation technique. For any given block, a search is performed in previously coded frames to determine a motion vector. The determined motion vector is utilized by the encoder and decoder to predict the image data of a block.

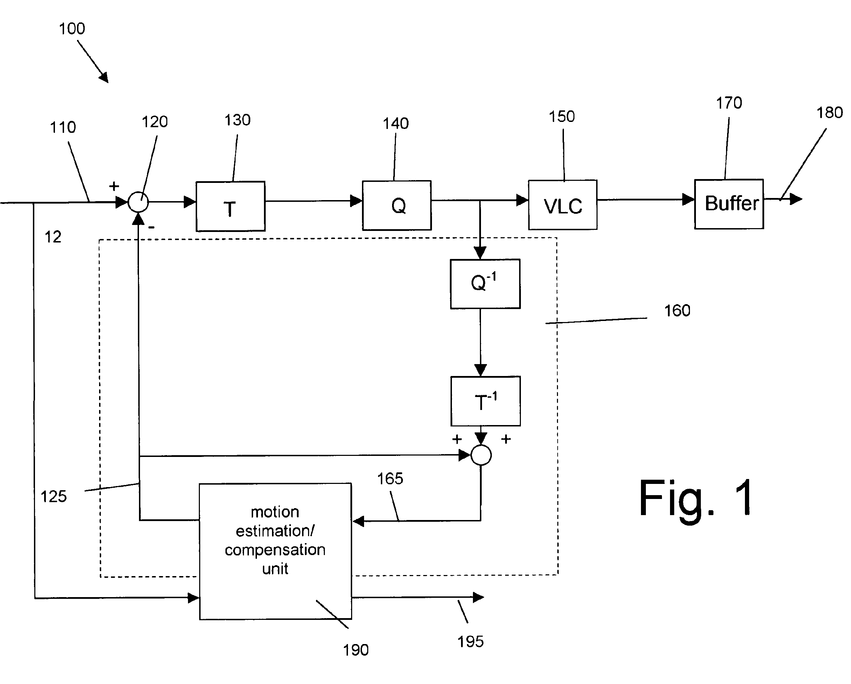

An example of a video encoder configuration is illustrated in Fig. 1. The video encoder, generally denoted by reference numeral 100, comprises a subtractor 120 for determining differences between a current video image and a prediction 125 of the current image based on previously encoded images. A transform unit 130 transforms the differences from the spatial domain to the frequency domain, a quantization unit 140 quantizes the obtained transform coefficients provided by transform unit 130, a variable length coding unit 150 entropy encodes the quantized transform coefficients, and a video buffer 170 adapts the compressed video data having a variable bit rate to a transmission channel having a fixed bit rate and/or to adapt the stream of compressed video data to bit rate variation of the transmission channel.

The operation of the video encoder of Fig. 1 is as follows. The encoder employs a differential pulse code modulation (DPCM) approach which only transmits differences between subsequent fields of frames of an input video sequence 110. These differences are determined in subtractor 120 receiving the video sequence 110 to be encoded in order to subtract a prediction 125 of the current images therefrom.

The prediction 125 is based on the decoding result 165 (the "currently decoded image") of previously encoded images at the encoder side. This is accomplished by a decoding unit 160 being incorporated into video encoder 100. Decoding unit 160 performs the encoding steps in a reverse manner, i.e. decoding unit 160 comprises an inverse quantizing unit Q⁻¹, an inverse transform unit T⁻¹, and an adder for adding the decoded differences to the prediction 125. In the same manner, a separate decoder (not shown in the drawings) receiving the encoded sequence 180 of video images will decode the received data stream and output decoded images 165.

The motion compensated DPCM, conducted by the video encoder of Fig. 1, predicts current frame of field data from corresponding previous field data based on an estimation on a motion between current and previous frames. The motion estimation is determined in terms of two-dimensional motion vectors representing a displacement of pixels between the current and previous frames. Usually, motion estimation is performed on a block-by-block-basis wherein a block in a current frame is compared with blocks in previous frames until a best match is determined. Based on the comparison results, an inter-frame displacement vector for each block of a current frame is estimated. This is accomplished by a motion estimation/compensation unit 190 included in the encoder of Fig. 1.

Based on the results of motion estimation, motion compensation provides a prediction utilizing the determined motion vector. The information contained in a prediction error block, resulting from the differences between the current and the predicted block, is then transformed into the transform coefficients by transform unit 130. Generally, a two-dimensional Transform (T), for instance a Discrete Cosine Transform or an Integer Transform, is employed therefore. The resulting transform coefficients are quantized and finally entropy encoded (VLC) in entropy encoding unit 150.

The transmitted stream of compressed video data 180 is received by a decoder (not shown) for again producing the sequence of encoded video images from the received bit stream. The decoder configuration corresponds to that of decoder 160 described in connection with Fig. 1 (wherein the decoder does not include a motion estimation unit 220). A detailed description of a decoder configuration is omitted therefore

The prediction between subsequent fields or frames, which is performed in order to take advantage of temporary redundancies between subsequent images, is conducted either in form of a uni-directional or in form of a bi-directional motion estimation and compensation. When a selected reference frame in motion estimation is a previously encoded frame, the encoded frame is referred to as a P-picture. In case both, a previously encoded frame and a future frame, are chosen as reference frames, the frame to be encoded is referred to as a B-picture.

Latest video encoding standards offer the option of having multiple reference frames for inter-picture encoding. The use of multiple reference frames results in a more efficient coding of images. For this purpose, motion estimation and compensation utilizes a multi-frame buffer for providing several reference pictures. The motion vector is accompanied by additional information indicating the individual reference image used.

The internal configuration of a motion estimation and compensation unit 190 of Fig. 1 is shown in Fig 2. The currently decoded image 165 is provided to multi-frame buffer 200 to be stored as one of the reference images. The management control of those images is performed by a controller 230. As shown in Fig. 3, the multi-frame buffer 200 comprises a plurality of memory areas 300 for storing reference frames of a video signal. Preferably, the memory areas 300 are divided into different kinds of memory areas, namely those for short term reference images and those for long term reference images (not shown).

Other images of the encoded video sequence, which are denoted as I-pictures, only reduce special redundancies within the image and do not exploit any temporal information.

According to the emerging H.264 video encoding standard, instantaneous decoder refresh (IDR) pictures are additionally provided. Such IDR pictures do not exploit any temporal information corresponding to the encoding of I-pictures. In addition, an IDR pictures resets the multi-frame buffer in order break inter-dependencies from any picture decoded prior to IDR-picture. For this purpose, the coding/decoding process marks all current reference pictures in the multi-frame buffer 200 as "unused for reference" immediately before encoding/decoding IDR-picture. Marking all reference pictures as "unused for reference" indicates that subsequent pictures in the encoding/decoding order are only processed without inter-prediction from pictures prior to the IDR-picture. Hence, the use of IDR-pictures reduce the processing effort for random access to any of the encoded images of the video sequence. IDR-pictures enable a jump to any temporal position within the encoded bit stream and decoding the subsequent pictures without decoding any of the previous images.

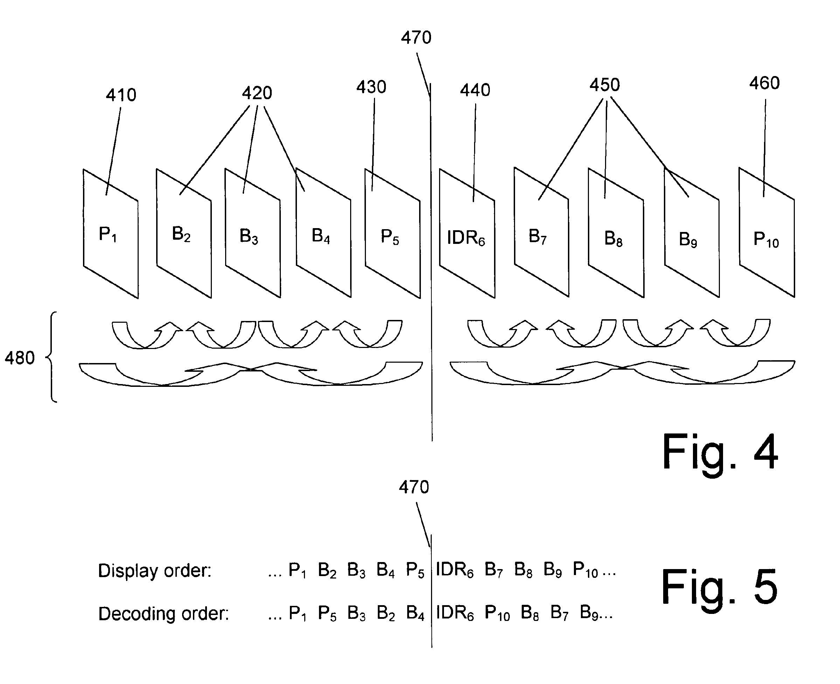

The encoding of video images employing IDR-pictures will be explained in more detail with reference to Figures 4 and 5. Fig 4 illustrates a portion of a video sequence to be encoded consisting of images 1 to 10. Letters (e.g. P, B or IDR) within these images represent the employed coding structure, i.e. the coding type of each of the images. As shown in Fig. 4, the example image sequence is encoded by employing P-type images 410, 430, 460 and B-type images 420, 450 arranged there between. Arrows 480 illustrate the individual images utilized as reference images.

One of the images of the sequence of Fig. 4 is encoded as IDR-picture 440. As mentioned above, IDR-type images serve to allow random access to images with a sequence of encoded video images. The two main features of such IDR-pictures are:
1. The IDR-picture 440 only contains intra encoded image blocks (I- or SI-slice types).
2. The IDR-picture 440 causes the encoding and decoding process to break inter-dependencies to any picture 410, 420 430 prior to the IDR-picture 440. This break is preferably implemented by marking all current reference pictures as "unused for references" and is performed immediately before the encoding and decoding of IDR-picture 440 as indicated by line 470 in Fig 4.

The first of the above features of IDR-pictures, namely to only intra encode video data, is similar to that of former video encoding standards like MPEG-1 or MPEG-2 utilizing I-type frames.

The second of the above features has no antecedents in former video encoding standards. These former standards only apply a predetermined prediction scheme including a maximum of one reference frame prior to the currently encoded/decoded frame and another one following the current frame. Latest video coding standards like H.263++ and H.264/AVC apply a plurality of reference images for motion compensated prediction. A single I-picture cannot anymore break inter-prediction to previous frames. For this purpose, a "breakpoint" 470 is introduced into the encoding/decoding process in order to start any inter-prediction a new utilizing an IDR picture as shown in Fig.5.

The use of IDR-pictures causes a number of problems. One of the main problem is that the coding efficiency is reduced.

Accordingly, it is the object of the present invention to provide an encoding method, an encoder, a decoding method and a decoder which enable a more efficient compressing of a video sequence.

This is achieved for an encoding method by the features as set forth in claim 1, for an encoder by the features as set forth in claim 13, for a decoding method by the features as set forth in claim 23, and for a decoder by the features as set forth in claim 33.

According to a first aspect of the present invention, a method for predictive encoding a sequence of video images is provided. The encoding method employs a motion estimation for determining motion vectors between each of a plurality of image areas of an image to be encoded and image areas of a plurality of reference images. Said reference images being previously encoded images of said image sequence. During encoding, the method subjects all images of said image sequence to motion estimation except predetermined individual images thereof. In addition, the method disables current reference images from being reference images wherein a disabling of all current reference images except the predetermined image not subjected to motion estimation is performed after lapse of a predetermined delay after having encoded the predetermined image of the images not subjected to motion estimation.

According to a second aspect, an encoder for predictive encoding a sequence of a video image is provided. The encoder comprises a multi-frame buffer, a motion estimation unit and a buffer controller. The multi-frame buffer stores a plurality of reference images. The reference images being previously encoded images of said image sequence. The motion estimation unit determines a motion vector between each of a plurality of image areas of an image to be encoded and image areas of a plurality of said reference images. The motion estimation unit being adapted to subject all images of said image sequence to be encoded to motion estimation except predetermined individual images thereof. The buffer controller disables current reference images from being reference images wherein said buffer controller disables all current reference images except the predetermined image not subjected to motion estimation after lapse of a predetermined delay after encoding the image of the predetermined individual image not subjected to motion estimation.

According to a third aspect of the present invention, a method for decoding a sequence of encoded video images is provided. The decoding method performs motion compensation based on motion vectors for predicting image areas of an image to be decoded from image areas of a plurality of reference images. Said reference images being previously decoded images of said image sequence. The method subjects all images of said image sequence to motion compensation during decoding except predetermined individual images thereof. Further, the method disables all current reference images from being reference images except the predetermined image not subjected to motion estimation. The reference images are disabled after lapse of a predetermined delay after decoding the image of the predetermined individual image not subjected to motion estimation.

According to a fourth aspect, a decoder for decoding a sequence of encoded video images is provided. The decoder comprises a multi-frame buffer, a motion compensation unit and a buffer controller. The multi-frame buffer stores a plurality of reference images. The reference images being previously decoded images of said sequence of encoded video images. The motion compensation unit predicts image areas of an image to be decoded by image areas of a plurality of the reference images. The motion compensation unit subjecting all images of the sequence of encoded images to motion compensation except predetermined individual video images thereof. The buffer controller disables all current reference images from being reference images except the predetermined image not subjected to motion estimation wherein the buffer controller disables said reference images after lapse of a predetermined delay after decoding the image of the predetermined video image not subjected to motion compensation.

It is the particular approach of the present invention that during encoding/decoding of IDR images, i.e. images not subjected to motion estimation and compensation, the reference images stored in the multi-frame buffer are not immediately marked as unused for reference in accordance with the prior art encoding/decoding standards. In contrast, a reference picture refresh, i.e. a marking of all previous reference images as "unused", is delayed by a predefined delay. Consequently, B-type images positioned prior to an IDR-type image can be encoded/decoded dependent on the subsequent IDR-type image. Hence, the coding efficiency can be improved without reducing the advantages of IDR-type images. In particular, the backward reference to prior B-type images does not effect the random access capabilities.

Preferably, the predetermined delay is defined by a particular number of pictures indicating the number of pictures after decoding the IDR picture before performing a decoder reference refresh by disabling reference images. Such a number of pictures may be set in advance for all IDR images or individually transmitted for each of the IDR images.

Alternatively, a separate refresh-flag is inserted into the encoded stream of data at that temporal position for performing the disabling at the decoder side. Such a flag enables an individual adaptation of the disabling position of reference images to the encoding process of video data, i.e. to the employed image type coding structure.

According to a further alternative, the disabling is performed immediately before encoding/decoding a P-type image following an IDR-type image.

Further preferred embodiments of the present invention are the subject matter of dependent claims.

Other embodiments and advantages of the present invention will become more apparent from the following description of preferred embodiments given in conjunction with accompanying drawings, in which:
- Fig. 1: illustrates a block diagram of a motion compensated DPCM video encoder;

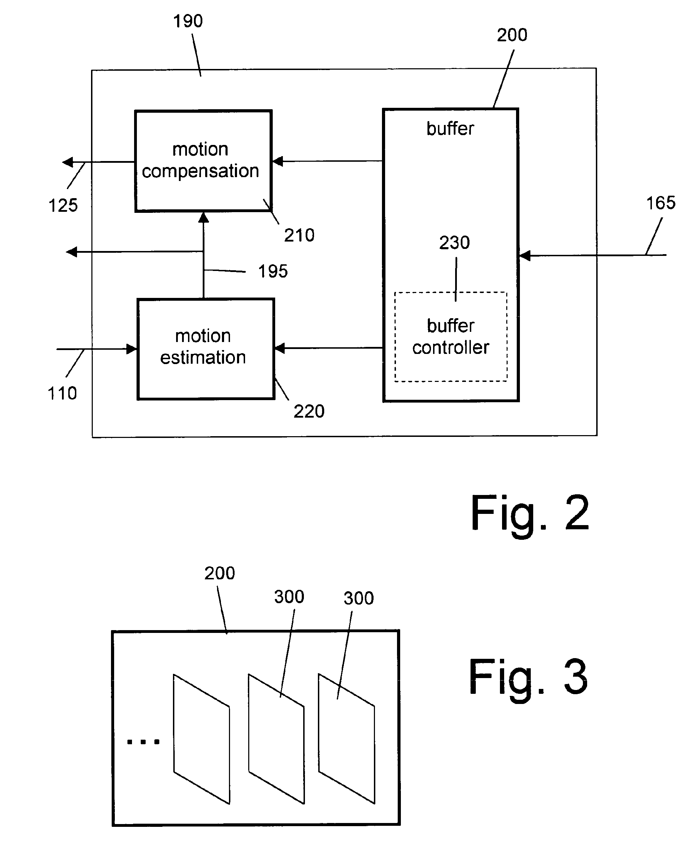

- Fig. 2: illustrates an example of the internal configuration of a motion estimation /compensation unit of Fig. 1;
- Fig. 3: illustrates an internal configuration of a multi-frame buffer of Fig. 2;
- Fig. 4: illustrates an example of an image type encoding/decoding structure of a portion of a video sequence in accordance with the prior art;
- Fig. 5: illustrates a display order and decoding order of the video sequence of Fig. 4;

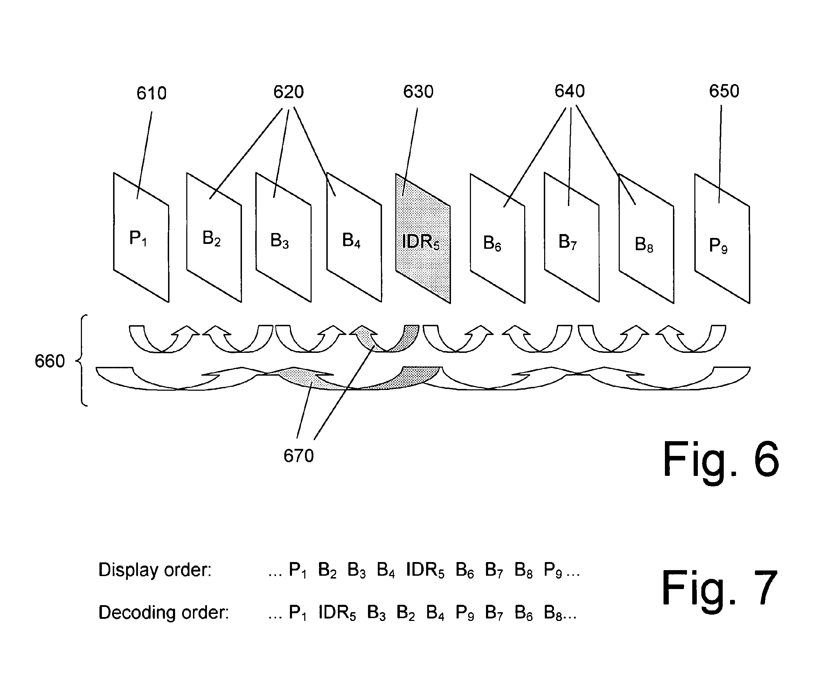

- Fig. 6: illustrates an example of an image type encoding/decoding structure of a portion of a video sequence in accordance with the present invention;
- Fig. 7: illustrates a display order and a decoding order corresponding to the example of Fig. 6;

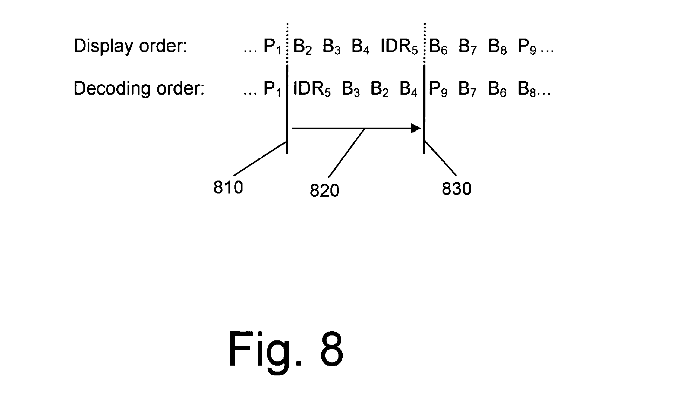

- Fig. 8: illustrates the delay applied to a disabling of reference images in accordance with the present invention;

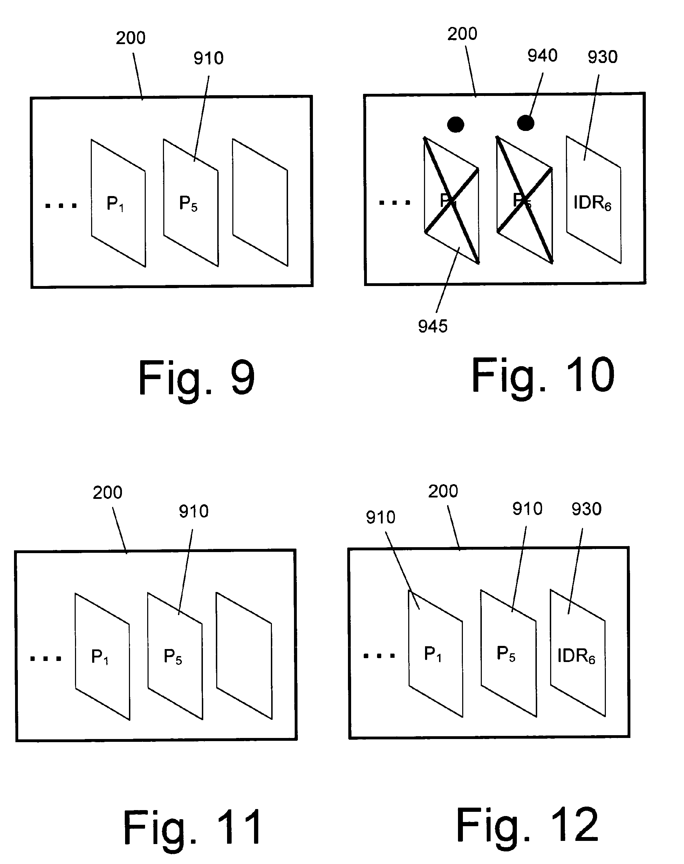

- Fig. 9: illustrates an example of reference images stored in a multi-frame buffer;
- Fig. 10: illustrates an example of reference images in a multi-frame buffer after a disabling of reference images has been performed;
- Fig. 11: illustrates an example of a multi-frame buffer in accordance with Fig. 9;
- Fig. 12: illustrates an example of a multi-frame buffer during encoding or decoding in accordance with the present invention;

Referring to Fig. 6, the particular encoding and decoding approach of the present invention is illustrated. The portion of a video sequence shown in Fig. 6 consists of a P-type image 610 followed by three B-type images 620. While the conventional image type encoding/decoding structures do not make any reference to a subsequent IDR-type image (cf. IDR-image 440 in Fig. 4), the encoding/decoding approach of the present invention allows inter-dependencies between an IDR-type image 630 and prior B-type images 620. This difference is emphasized by arrows 670 in Fig. 6 connecting the IDR-type image 630 and previous B-type images 620.

Images 640, 650 subsequent to the IDR-type image 630 are encoded in accordance with the conventional encoding/decoding structure as shown by the respective arrows 660. As from the IDR-type image 630 on, the referencing of images corresponds to that shown in the example structure of Fig. 4.

The effect of the inventive encoding/decoding approach on the display order and decoding order (which is identical to the encoding order) is illustrated in Fig. 7. While the display order corresponds to that of the conventional approaches shown in Fig. 5, the decoding order is rearranged in order to take the inter-dependencies between the IDR-type image 630 and the B-type images 620 into account. For this reason, the decoding order is changed such that the IDR-type image 630 is shifted to a position before the images 620 referring thereto. As the IDR-image is used for inter-prediction to previous images, the disabling step for disabling the current reference images (except the IDR-type image) is shifted to a later position.

The shifting of the reference image disabling is illustrated in Fig. 8. As shown in Fig. 8, the temporal position 810 within the decoding/encoding order of the IDR-type image and the temporal position 830 of the reference disabling execution differ by predetermined delay 820 in between. The reference picture refresh delay enables a decoding of the images B₂, B₃, B₄ being inter-dependent on the images P₁ and IDR₅. After decoding of such B-type images, all reference images except the IDR-type image are refreshed, i.e. are marked as unused.

Although there exists a plurality of possibilities in order to implement a reference picture refresh, preferably, one of the following alternative is used for this purpose:

Firstly, the predetermined delay value is submitted together with the IDR-image data by an encoder to a decoder. The submitted delay value determines the number of pictures after the IDR-picture for disabling the reference images.

Alternatively, a separate refresh flag is transmitted at the temporal position 830 for performing a reference picture refresh. The flag indicates that all reference features except the last IDR picture have to be refreshed immediately, i.e. "marked as unused".

According to a further alternative embodiment, the reference picture refresh is executed immediately before the first P-type picture following an IDR-picture. This embodiment advantageously avoids any additional information to be transmitted to the decoding side.

The process of marking reference images in multi-frame buffer 200 as "unused" is illustrated in Figs. 9 to 12. Fig. 9 illustrates a configuration of multi-frame buffer 200 storing reference frames 910. Conventionally, as shown in Fig. 10, these reference images 945 are marked as "unused" as soon as an IDR-type image 130 is encoded or decoded.

Although the present invention starts from a multi-frame buffer 200 configuration as shown in Fig. 11 which corresponds to that of Fig. 9, the reference images 910 are maintained as a reference as shown in Fig. 12 when encoding or decoding an IDR-type image 930 and beyond. All reference images are valid references as long as the images to be displayed prior to the IDR-type image and being inter-dependent from the IDR-type image are not yet encoded/decode. After having encoded or decoded the all images to be displayed prior to the IDR-type image, the previous reference images 945 are marked as unused as shown in Fig. 10. For this purpose, multi-frame buffer 200 may provide a flag 940 assigned to each of the memory areas 300 intended for storing a reference image.

Summarising, the present invention delays a reference image refresh from the temporal position of an IDR-type image within a sequence of encoded images in order to enable an inter-prediction to images to be displayed prior to the IDR-type image.

## Claims

1. A method for predictive encoding a sequence of video images (110), the encoding method employing motion estimation for determining a motion vector (195) between each of a plurality of image areas of an image to be encoded and image areas of a plurality of reference images (910), said reference images (910) being previously encoded images of said image sequence (110), the method comprising the steps of:
subjecting all images of said image sequence (110) to motion estimation during encoding except predetermined individual images (630) thereof, and
disabling current reference images (945) from being reference images
**characterized in that**
said disabling step being performed after lapse of a predetermined delay (820) after encoding of an image (630) of said predetermined individual images not subjected to motion estimation wherein all current reference images (945) except the image (930) not subjected to motion estimation are disabled from being reference images.

2. A method according to claim 1, wherein said method further comprising the step of encoding a B-type image (620) positioned prior to said predetermined image (630) not subjected to motion estimation within said image sequence (110) wherein said B-type image (620) referencing the predetermined image (630) not subjected to motion estimation.

3. A method according to claim 1 or 2, wherein said predetermined delay (820) representing a particular number of images between the encoding of the image (630) not subjected to motion estimation and the execution of said disabling step.

4. A method according to any of claims 1 to 3, further comprising the step of adding a delay value to encoded image data (180) of the image (630) not subjected to motion estimation, said delay value indicating said predetermined delay (820) before executing said disable step.

5. A method according to any of claims 1 to 3, further comprising the step of inserting a flag into the encoded image data (180), said flag indicating the position (830) within said image sequence (110) for executing the disabling step at the decoder side.

6. A method according to claim 5, wherein said flag being inserted into the encoded image data (180) at a position (830) being a predetermined number of images after the position (810) of the image data of the image (630) not subjected to motion estimation.

7. A method according to any of claims 1 to 3, wherein said disabling step being executed immediately before encoding a first P-type image (650) after having encoded the image (630) not subjected to motion estimation.

8. A method according to any of claims 1 to 7, wherein said plurality of reference images (910, 930) being stored in a multi-frame buffer (200).

9. A method according to claim 8, wherein said disabling step disabling the reference images (910) in said multi-frame buffer (200) by marking as not to be used as a reference during motion estimation.

10. A method according to claim 9, further comprising the step of overwriting a reference image (945) marked as not to be used during motion estimation by new reference image data in said multi-frame buffer (200) upon execution of said disabling step.

11. A method according to claim 9, further comprising the step of deleting a reference image (945) marked as not to be used during motion estimation from said multi-frame buffer (200) upon execution of said disabling step.

12. A method according to any of claims 1 to 11, wherein the encoding of the predetermined image (630) not subjected to motion estimation is based on an exploitation of spatial redundancies within the image (630).

13. An encoder for predictive encoding a sequence of video images (110), comprising:
a multi-frame buffer (200) for storing a plurality of reference images (910), said reference images (910) being previously encoded images of said image sequence (110),
a motion estimation unit (220) for determining a motion vector (195) between each of a plurality of image areas of an image to be encoded and image areas of a plurality of said reference images (910), said motion estimation unit being adapted to subject all images of said image sequence (110) to motion estimation during encoding except predetermined individual images (630) thereof, and
a buffer controller (230) for disabling current reference images (945) from being reference images
**characterized in that**
said buffer controller (230) being adapted to disable said reference images (945) after lapse of a predetermined delay (820) after encoding the image (630) of said predetermined individual images not subjected to motion estimation wherein all current reference images (945) except the image (930) not subjected to motion estimation are disabled from being reference images.

14. An encoder according to claim 13, wherein said method estimation unit (220) being further adapted to encode a B-type image (620) positioned prior to said predetermined image (630) not subjected to motion estimation within said image sequence (110) wherein said B-type image (620) referencing the predetermined image (630) not subjected to motion estimation.

15. An encoder according to claim 13 or 14, wherein said predetermined delay (820) representing a particular number of images between the encoding of the image (630) not subjected to motion estimation and the disabling of said reference images (945).

16. An encoder according to any of claims 13 to 15, further comprising an inserting unit for adding a delay value to encoded image data (180) of the image (630) not subjected to motion estimation, said delay value indicating said predetermined delay (820) before disabling said reference images (945).

17. An encoder according to any of claims 13 to 15, further comprising an inserting unit for inserting a flag into the encoded image data (180), said flag indicating the temporal position (830) for disabling said reference images (945) at the decoder side.

18. An encoder according to claim 17, wherein said inserting unit being adapted to insert said flag into the encoded image data (180) at a position (830) being a predetermined number of images after the position (810) of the image data of the image (630) not subjected to motion estimation.

19. An encoder according to any of claims 13 to 15, wherein said buffer controller (230) being adapted to disable said reference images (945) immediately before encoding a first P-type image (650) after having encoded the image (630) not subjected to motion estimation.

20. An encoder according to any of claims 12 to 19, wherein said multi-frame buffer (200) being adapted to store a marking (940) with respect to each of said reference images (910) marking a reference image (945) as not to be used as a reference in motion estimation.

21. An encoder according to any of claims 12 to 20, wherein said markings (940) allowing a marked reference image (945) to be overwritten by new image data.

22. An encoder according to any of claims 12 to 21, further comprising encoding means for encoding the image (630) not subjected to motion estimation based on an exploitation of spatial redundancies within the image (630).

23. A method for decoding a sequence of encoded video images (180), the decoding method employing motion compensation based on motion vectors (195) for predicting image areas of an image to be decoded from image areas of a plurality of reference images (910), said reference images (910) being previously decoded images of said image sequence, the method comprising the steps of:
subjecting all images of said image sequence to motion compensation during decoding except predetermined individual images (630) thereof, and
disabling current reference images (945) from being reference images
**characterized in that**
said disabling step being performed after lapse of a predetermined delay (820) after decoding the image (630) of said predetermined individual images not subjected to motion compensation wherein all current reference images (945) except the image (930) not subjected to motion compensation are disabled from being reference images.

24. A method according to claim 23, wherein said method further comprising the step of decoding a B-type image (620) to be displayed prior to said predetermined image (630) not subjected to motion compensation within said image sequence wherein said B-type image (620) referencing the predetermined image (630) not subjected to motion compensation.

25. A method according to claim 23 or 24, wherein said predetermined delay (820) representing a particular number of images between the temporal position (810) of decoding the image (630) not subjected to motion compensation and the temporal position (830) of executing said disabling step.

26. A method according to any of claims 23 to 25, wherein said disabling step being executed in accordance with a delay value added to the encoded image data (180) of the image (630) not subjected to motion estimation.

27. A method according to any of claims 23 to 25, wherein said disabling step being executed in accordance with a flag added to the encoded image data (180) of a currently decoded image, said flag indicating the position (830) within said image sequence for executing the disabling step at the decoder side.

28. A method according to any of claims 23 to 25, wherein said disabling step being executed immediately before decoding a first P-type image (650) after having decoded the image (630) not subjected to motion compensation.

29. A method according to any of claims 23 to 28, wherein said plurality of reference images (910) being stored in a multi-frame buffer (200).

30. A method according to claim 29, wherein said disabling step marking current reference images (945) stored in said multi-frame buffer (200) not to be used as a reference during motion compensation.

31. A method according to claim 30, further comprising the step of overwriting a reference image (945) marked as not to be used during motion compensation by new reference image data in said multi-frame buffer (200) upon execution of said disabling step.

32. A method according to claim 30, further comprising the step of deleting a reference image (945) marked as not to be used during motion compensation from said multi-frame buffer (200) upon execution of said disabling step.

33. A decoder for decoding a sequence of encoded video images (180), comprising:
a multi-frame buffer (200) for storing a plurality of reference images (910), said reference images (910) being previously decoded images of said sequence of encoded video images,
a motion compensation unit (210) for predicting image areas of an image to be decoded by image areas of a plurality of said reference images (910), said motion compensation unit (210) being adapted to subject all images of said sequence of encoded images to motion compensation during decoding except predetermined individual images (630) thereof, and
a buffer controller (230) for disabling current reference images (945) from being reference images
**characterized in that**
said buffer controller (230) being adapted to disable said reference images (945) after lapse of a predetermined delay (820) after decoding the image (630) of said predetermined individual images not subjected to motion compensation wherein all current reference images (945) except the image (930) not subjected to motion compensation are disabled from being reference images.

34. A decoder according to claim 33, wherein said compensation unit (210) being further adapted to decode a B-type image (620) positioned prior to said predetermined image (630) not subjected to motion compensation within said sequence of encoded video images wherein said B-type image (620) referencing the predetermined image (630) not subjected to motion compensation.

35. A decoder according to claim 13 or 14, wherein said predetermined delay (820) representing a particular number of images between the decoding of an image (630) not subjected to motion compensation and the disabling of said reference images (945).

36. A decoder according to any of claims 33 to 35, further comprising a detection unit for detecting a delay value added to the encoded image data of the image (630) not subjected to motion compensation, said delay value indicating said predetermined delay (820) disabling said reference images (945).

37. A decoder according to any of claims 33 to 35, further comprising a detection unit for detecting a flag added to the encoded image data, said flag indicating the temporal position (830) for disabling said reference images (945).

38. A decoder according to any of claims 33 to 35, wherein said buffer controller (230) being adapted to disable said reference images (945) immediately before decoding a first P-type image (650) after having decoded the image (630) not subjected to motion compensation.

39. A decoder according to any of claims 33 to 38, wherein said multi-frame buffer (200) being adapted to store a marking (940) with respect to each of said reference images (910) marking a reference image (945) as not to be used as a reference in motion compensation.

40. A decoder according to claim 39, wherein said markings (940) allowing a marked reference image (945) to be overwritten by new image data.

41. A computer program comprising code means adapted to perform all steps of claim 1 and/or claim 23.

42. A computer program product comprising a computer readable medium having computer readable program code embodied thereon, said program code being adapted to carry out all steps of claim 1 and/or claim 23.
